# EUROPEAN PATENT APPLICATION

(11) **EP 3 236 127 A1**
(43) Date of publication of application: **25.10.2017**
(21) Application number: 17166027.7
(22) Date of filing: 11.04.2017
(51) Int. Cl.: F16L 37/092

(54) **A CONNECTOR**

(30) Priority: 20.04.2016 GB 201606869
(71) Applicant: John Guest International Limited, West Drayton, Middlesex UB7 8JL (GB)
(72) Inventor: GUEST, Timothy Steven, West Drayton, Middlesex UB7 8 JL (GB)
(74) Representative: Boult Wade Tennant

(57) **Abstract**

A connector comprising a body (1) having a throughway (5) which is open at one end. A shoulder (7) in the throughway faces the open end and supports an O-ring. A collet (3) in the open end of the throughway has a plurality of legs (19) extending into the body away from the open end, each engaging with the body and having an inwardly facing tooth (21) to grip, in use, a tube in the throughway. The body has a plurality of fingers (11) extending to the open end. The connector further comprising a cap (2) fitting over the open end of the body and extending from the open end towards the opposite end. The cap has a plurality of recesses (14) in a wall at the open end into each of which a finger is retained by a snap fit. The radially inwardly facing faces of the fingers (13) of the body (1) incline inwardly towards the open end providing a cap angle for the collet (3).

## Description

The present invention relates to a connector comprising a body having a throughway which is open at one end, a shoulder in the throughway faces the open end and supports an O-ring; a collet in the open end of the throughway and having a plurality of legs extending into the body away from the open end, each engaging with the body and having an inwardly facing tooth to grip, in use, a tube in the throughway; wherein the body has a plurality of fingers extending through the open end; the connector further comprising a cap fitting over the open end of the body and extending from the open end towards the opposite end, the cap having a plurality of recesses in a wall at the open end into each of which a finger is retained by a snap-fit. Such a connector will subsequently be described as "of the kind described". A connector of the kind described is disclosed in our own earlier application EP 2860436. A similar connector is disclosed in US 7,490,865.

Conventional connectors have a two-part body assembly in which the two parts are welded together. This has a number of drawbacks in that the welding process requires complex equipment, the materials must be compatible and suitable for ultrasonic welding and the cap and body must be sufficiently thick and robust to allow the welding. This problem is solved by a connector of the kind described in which the two components are a snap-fit together. The presence of individual fingers which provide the snap-fit provides a low stress arrangement as the fingers can readily deflect. Also, because the snap-fit is made at the open end, the forces experienced at this end when the connector undergoes the bending load are significantly less than those experienced at the opposite end.

The present invention relates to an improvement on the connector of the kind described.

According to the present invention, a connector of the kind described is characterised in that the radially inwardly facing faces of the fingers of the body are inclined inwardly towards the open end providing a cap angle for the collet.

With the connectors of EP 2860436 and US 7,490,865, it is the cap and not the fingers of the body which provide the cap angle (i.e. the face which is inclined inwardly towards the open end). In use, when a tube is retained in a collet within the connector, any movement tending to pull the tube out of the connector will also move the collet because the collet grips the tube via a plurality of teeth. The presence of the cap angle provides a ramp surface which deflects the collet legs inwardly, further preventing removal of the tube.

Providing the cap angle on the body rather than the cap results in a number of benefits. Under the above-mentioned load when a tube is pulled out of the connector, the pressure from the collet pushes the fingers of the body radially outwardly and hence firmly into the cap to ensure that they are always fully engaged in the cap. This ensures that, when the connector is under stress, the gripping force between the body and cap is increased. Further, the angle of the fingers means that each finger is naturally thicker in the vicinity of the open end. This increases the strength of the finger under shear and bending moments, leading to a stronger connection between the cap and body.

Preferably the inwardly facing surface of the cap between the fingers is provided with a shoulder which faces the opposite end. This shoulder effectively provides a stop which engages with a complementary face on the collet legs which improves the ability of the connector to retain the collet especially during transit when there is no tube in the collet. As this stop is separate from the surfaces providing the cap angle, the cap angle can be designed such that it is optimised for the situation when the tube is in place.

The inner face of the cap may be provided, in the vicinity of the regions which first engage with the fingers, with an outwardly flared portion which aligns the fingers with the cap during the assembly process.

An example of a connector in accordance with the present invention will now be described with reference to the accompanying drawings, in which:
Fig. 1 is a perspective view of the collet, cap and body prior to assembly;
Fig. 2 is a view similar to Fig. 1, but with the collet, cap and a part of the body cut away and with the collet in the cap;
Fig. 3 is a view similar to Fig. 2 with the collet, cap and body assembled and
Figs. 4 to 6 are views similar to Figs. 1 to 3 with the collet omitted so that the features of the cap and its interaction with the body are more clearly shown.

The connector broadly consists of three main components, namely the body 1, cap 2 and collet ring 3. As shown in the drawings, the connector is a double-ended connector having a cap 2 at each end (with the right hand one in the figures being already connected). The connector is suitable for connecting two tubes together. However, the invention could equally apply to a single-ended connector to connect a tube to an underlying structure. Alternatively, the double-ended connector could be provided with a connector according to the present invention at one end and a different type of connector at the opposite end. It may also be an angled or T-shape connector.

The body 1 is open at one end 4 and has an axial throughway 5 extending through the connector. The throughway 5 is a stepped bore having a narrow diameter portion 6 with a diameter which corresponds approximately with the inner diameter of the tube. This portion 6 terminates at a first shoulder 7 facing the open end 4 against which the tube abuts, in use. A second shoulder 8 provides a further outward step for the bore and is arranged to receive an O-ring 9 which seals, in use, against the tube. Also in the vicinity of this region is an outwardly extending annular flange 10 which provides an end stop for the cap 2.

Extending towards the open end 4 of the body are four fingers 11 which are evenly spaced about the axis. Although four are illustrated, there may be more or less than this in practice and they do not necessarily need to be evenly spaced. Each finger is provided at the one end 4 with a radially outwardly projecting barb 12. The inner face 13 of each finger is inclined inwardly towards the open end providing a cap angle against which the collet legs bear when the collet is moved towards the open end. In order to make the inwardly inclined fingers, a tapered core pin is required in the moulding process. Because the fingers 11 are flexible, this tapered core pin is able to be withdrawn and the fingers 11 will flex outwardly as this happens. Alternatively, the core pin may be rotatable such that the outwardly flared portions of the core pin which form the fingers 11 are rotated into a position in which they are between the fingers 11 prior to withdrawal. This does mean, however, that the gaps between the fingers must have a greater radial extent than the fingers themselves.

The end cap 2 has a generally annular shape. It has four recesses 14 to receive the fingers 11.

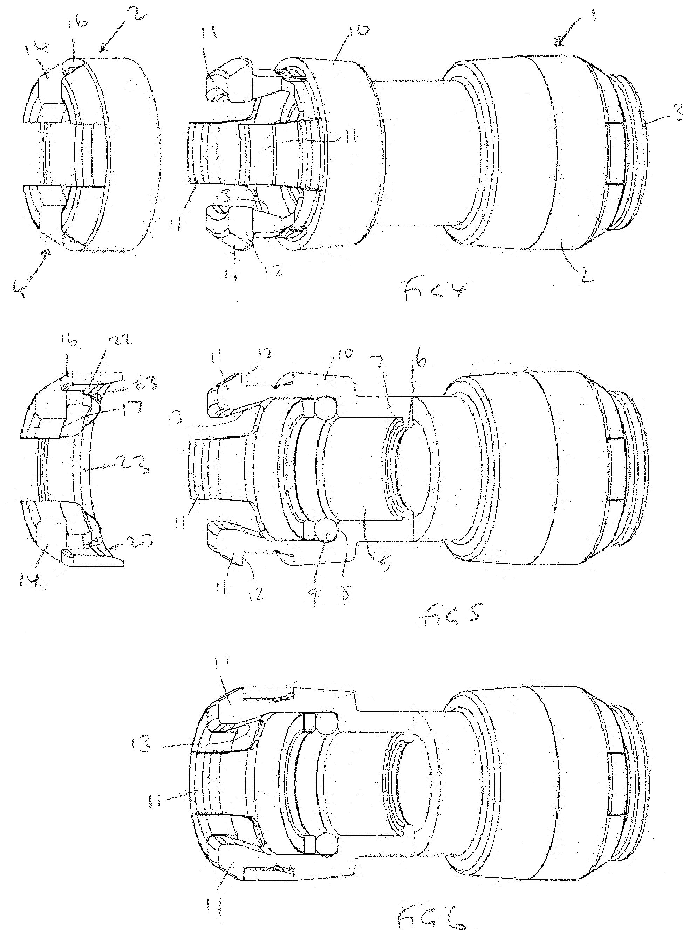

A shoulder 16 is provided on the radially outermost portion of the cap in each recess to face the one end 4. An inwardly facing second shoulder is 17 (best shown in Fig. 5) is provided between each finger 11 to provide a stop for the collet for engagement with the collet ring 3. The collet has an end ring 18 from which a plurality of resilient legs 19 extend away from the open end. The ends of the legs extend radially outwardly to define a shoulder 20. The collet is inserted into the cap and body such that the legs 18 deflect radially inwardly until the shoulder 20 on the collet passes the shoulder 17.

In use, when a tube inserted into the connector is pulled in a direction which would tend to pull it out of the connector, there are teeth 21 on the inner surface of the collet legs 19 which grip the outer surface of the tube. This pulling force causes the shoulder 20 to engage with the inner wall 13 causing inward deflection of the legs increasing the gripping force on the tube. The shoulder 17 retains the collet particularly where there is no tube in place. Without it, there is a danger that without a tube in place, an axial force on the collet would pull the collet legs up the inclined faces 13 and out of the body.

The inner face 22 of the cap 2 between the recesses 14 is provided with a profiled surface which matches the profile of the fingers 11 (as best shown in Fig. 5). This profile also features four wide mouth guideways 23, one for each finger 11.

When the cap is placed on the body, any misalignment between the fingers 11 and the guideways 23 can be accommodated by the wide mouth which will alter the radial alignment between the body 1 and the cap 2 as the cap is pushed into the body until the fingers 11 line up with the guideways 23.

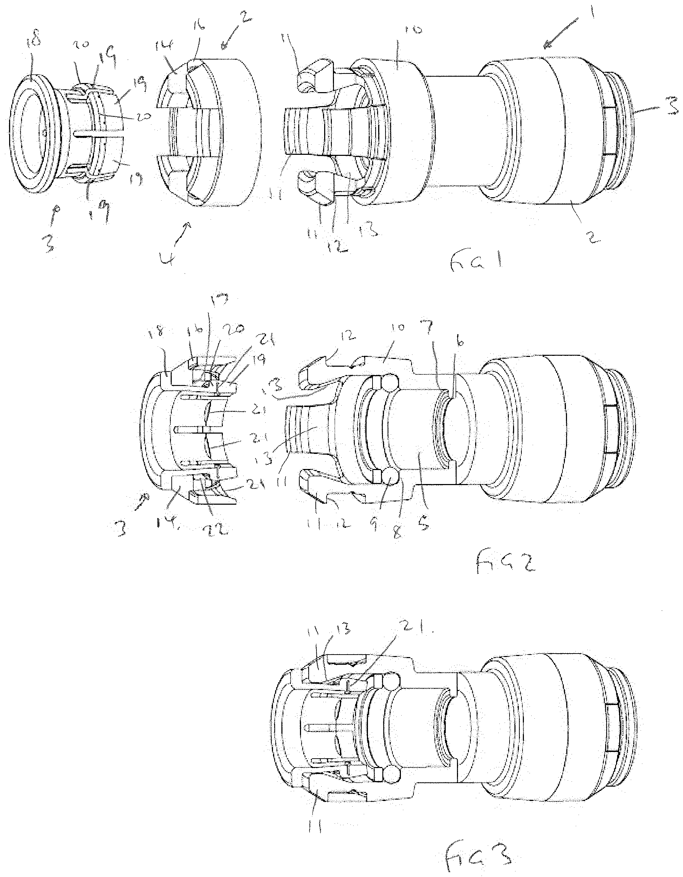

As the cap 2 is pushed into place, the fingers 11 will deflect inwardly. As they are thin components (compared to an annular shoulder), they can readily accommodate this small amount of inward deflection without causing undue stress on the material. As the cap reaches the position in which it is fully engaged with the body, the barbs 12 on the end of the fingers 11 snap onto the shoulders 16 to retain the cap in place as shown in Figs. 3 and 6. The impact force of a relatively narrow finger 11 snapping into place is a fraction of force of the annular shoulder of the prior art snapping into place. The barbs 12 are visible at the end of the cap allowing an assembler to confirm that the cap is in the correct position in the body. The assembly process is therefore one which is very easy and reliable and does not place undue stress on the body 1 or the cap 2.

If a bending force is applied to the tube inserted in a connector, the bending force is effectively centred around the open end 4 and will therefore be lower at this point than it is at a position further from the open end. Thus, although the bending load may have some tendency to cause the end of the cap opposite to the open end to be separated from the body, this can be tolerated as no part of the fixing is done at this end. The fixing at the open end remains largely unaffected by such a force.

## Claims

1. A connector comprising a body having a throughway which is open at one end, a shoulder in the throughway faces the open end and supports an O-ring; a collet in the open end of the throughway and having a plurality of legs extending into the body away from the open end, each engaging with the body and having an inwardly facing tooth to grip, in use, a tube in the throughway; **characterised in that** the body has a plurality of fingers extending to the open end; the connector further comprising a cap fitting over the open end of the body and extending from the open end towards the opposite end, the cap having a plurality of recesses in a wall at the open end into each of which a finger is retained by a snap fit; wherein the radially inwardly facing faces of the fingers of the body incline inwardly towards the open end providing a cap angle for the collet.

2. A connector according to claim 1, wherein the inwardly facing surface of the cap between the fingers is provided with a shoulder which faces the opposite end.

3. A connector according to claim 1 or claim 2, wherein the inner face of the cap is provided in the vicinity of the regions which first engage with the fingers with an outwardly flared portion which aligns the fingers with the cap during the assembly process.
